# EUROPEAN PATENT APPLICATION

(11) **EP 1 283 583 A2**
(43) Date of publication of application: **12.02.2003**
(21) Application number: 02077894.0
(22) Date of filing: 17.07.2002
(51) Int. Cl.: H02K 15/00

(54) **Stator with high slot-fill factor**

(30) Priority: 08.08.2001 US 924802; 16.01.2002 US 349168 P
(71) Applicant: Delphi Technologies, Inc., Troy, MI 48007 (US)
(72) Inventor: Bradfield, Michael D., Anderson, IN 46013 (US)
(74) Representative: Denton, Michael John

(57) **Abstract**

A stator core extends along a longitudinal axis and includes a yoke, and a plurality of radially-inwardly projecting teeth separated by intervening slots. A radially innermost portion of each tooth initially includes a pair of legs separated by a recess disposed therebetween. The conventional tooth tips are unformed in the first stage, thereby defining an increased-size slot opening for allowing the insertion of an enlarged stator winding, which has a width (*e.g.*, diameter for a round conductor) substantially equal to the width of the slot itself. In a second processing stage, after the core itself has been manufactured and wound with stator windings, the legs are cold-formed in order to form tooth tips, which define a reduced-size slot opening to provide an improved magnetic flux path and provide a wire retention function. A high slot fill stator design is provided, which allows and enables higher generator efficiencies and output for a given package size.

## Description

### BACKGROUND OF THE INVENTION

### 1. TECHNICAL FIELD

The present invention relates to a stator core of a dynamoelectric machine such as a generator.

### 2. DESCRIPTION OF THE RELATED ART

Generators are found in virtually every motor vehicle manufactured today. These generators, also referred to as alternators, produce electricity necessary to power a vehicle's electrical accessories and charge a vehicle's battery. Generators must produce electricity in sufficient quantities to power a vehicle's electrical system. Furthermore, generators must produce electricity having the characteristics necessary to be compatible with a vehicle's electrical components. A generator typically includes a stator assembly comprising a stator core and a stator winding, and a rotor.

Conventionally, the stator core contains the main current carrying windings ("stator windings") in which electromotive force produced by magnetic flux is induced. The core contains a plurality of radially-inwardly projecting teeth separated by intervening slots. Each slot has an open bottom formed by tooth tips of adjacent stator teeth. The slot opening is conventionally relatively narrow, compared with the width of the slot itself. The narrow slot opening in conventional arrangements, however, is not an accident, but rather a deliberate choice, ostensibly to provide both a magnetic flux path and to provide for wire retention. Conventionally, the stator windings may be wound and inserted into the slots in bundles. There are, however, shortcomings with conventional arrangements.

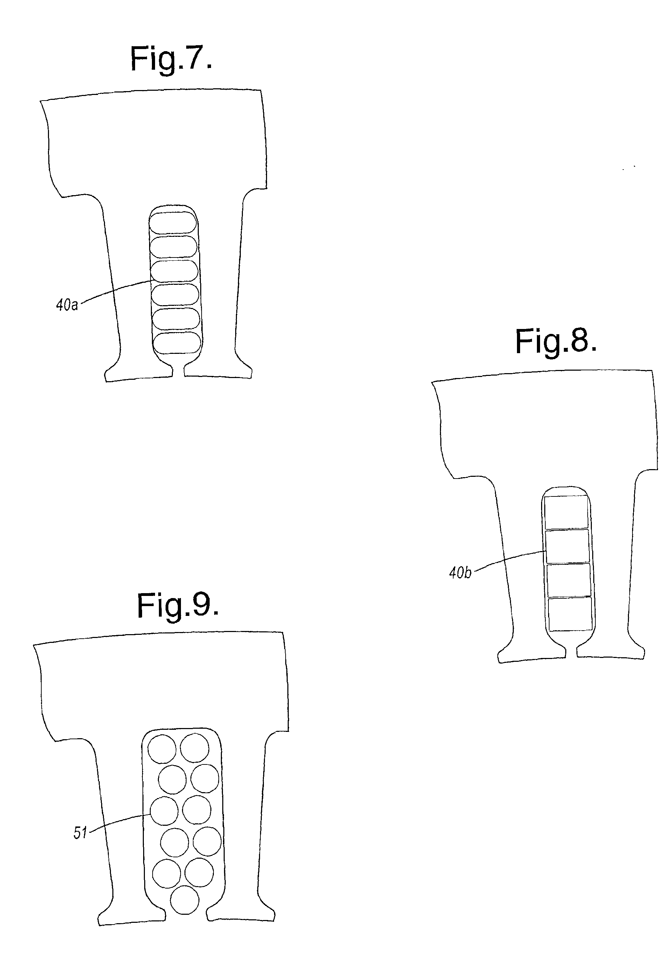

The first shortcoming relates to a so-called "slot fill" factor, typically expressed as a percentage. Particularly, the "slot fill" is a percentage of the total cross-sectional area of stator windings, taken relative to the total available cross-sectional area in the slot. The relatively narrow slot opening formed by the tooth tips, which are typically stamped directly into a steel lamination into the desired profile, restricts entry (and accordingly the size) of the stator windings used in the generator. A typical stator size and fill configuration is shown in Figure 9. Accordingly, obtaining an increased stator slot fill is difficult to achieve. Due to this manufacturing constraint, the slot fill is typically in the range of 50% of the net available slot space for a Lundell type generator. This constraint limits both the output power of the generator, as well as its efficiency for a given package size.

One approach taken in the art to improve the "slot fill" of a generator is to use a process involving so-called "hairpin" windings. With such a process, pre-formed conductors are inserted axially into the stator slots throughout the iron core of the stator. The multiple ends of these hairpin conductors are then joined to make, effectively, a continuous conductive loop in the stator. Since the conductors are inserted in an axial fashion, and not radially through the narrow slot opening as described above, such hairpin conductors are not limited by such small slot openings known in the art. Consequently, the hairpin conductor can be of a larger cross-sectional area, and also be non-round in shape. With such a size and shape, it is possible to neatly stack the conductors within the slot to increase the slot fill, which may approach 90%. However, such an approach significantly increases cost, complexity and scrap rate, as well as decreases reliability.

Another approach in the art involves deforming the tooth tips after inserting the stator windings, as seen by reference to U.S. Patent No. 4,176,444 entitled "METHOD AND APPARATUS FOR ASSEMBLING DYNAMOELECTRIC MACHINE STATORS" issued to Walker. Walker discloses a method for forming a stator including the steps of enlarging a slot opening between adjacent pairs of stator teeth by deforming the stator tooth tips (*e.g.*, with a punch), placing prewound stator windings in selected core slots and thereafter reducing the slot opening between those certain adjacent pairs of teeth by reforming the tooth tips so as to provide a cylindrical shaped central bore stator. The disclosure of Walker, however, does not teach using a conductor having a width substantially the same as the slot itself.

Thus, in sum, on the one hand, it would be desirable to keep the "tooth tips" since they can improve low speed performance of the generator among other things. However, on the other hand, the small slot opening which results from the "tooth tips" restricts the size of the stator windings, resulting in a low slot-fill stator having a reduced power output and a reduced efficiency.

There is therefore a need to provide a method of making a dynamoelectric machine that minimizes or eliminates one or more of the problems set forth above.

### SUMMARY OF THE INVENTION

One object of the present invention is to provide a stator core for a dynamoelectric machine, such as an alternating current (AC) generator, that solves one or more of the problems set forth above. The present invention provides a method that, during an initial step, employs a slot opening that is increased in width relative to conventional slot openings (*i.e.*, approximately equal to the width of the slot itself). The increased size slot openings allow stator windings having a width about equal to the slot width to be inserted (in a subsequent step) into the slots through the slot openings to thereby provide an increased slot fill. Thereafter, in a further subsequent step, the slot openings are closed up in order to provide an improved magnetic flux path and for wire retention. This is accomplished, in one embodiment, by cold-forming the ends of the stator teeth to form "tooth tips" after the core itself has been made and wound with the stator windings. The invention also provides another advantage, namely that of keeping the "tooth tips," which improve performance, particularly at low speed.

A method according to the present invention thus involves combining a stator winding having a width substantially equal to the slot width, with a deforming step that closes down the slot opening after the winding insertion. The method involves three basic steps. First, providing a stator core having a main axis, and including a plurality of teeth separated by intervening slots wherein each tooth includes unformed tooth tips that define a slot opening. Next, radially inserting the stator windings through the slot openings into the slots wherein the stator windings have a width (*e.g.*, a diameter for a round shape) substantially equal to the slot width. Finally, deforming the unformed tooth tips so as to reduce the slot opening width. The invention improves slot fill percentage without increasing the complexity or cost of the manufacturing operation, with no increase in scrap rate nor any decrease in reliability of the final product. The invention allows the use of conventional in-slot winding machines, for example.

Other features and advantages will be apparent to those of ordinary skill in the art from the detailed description and accompanying drawings describing and illustrating the invention by way of example only and not by way of limitation.

### BRIEF DESCRIPTION OF THE DRAWINGS

The operative features of the present invention are explained in more detail with reference to the drawings.

Figure 1 is a partial, plan view of a stator core suitable for use in to the present invention.

Figure 2 is an enlarged view of a pair of adjacent stator teeth corresponding to the encircled portion shown in Figure 1.

Figures 3-5 are simplified, plan views of a pair of adjacent stator teeth illustrating the progression of the method of manufacturing according to the present invention.

Figure 6 is a chart showing the effect of varying a tooth tip lateral extent.

Figures 7-8 are simplified diagrammatic views showing alternate rectangular and square stator winding wire shapes, respectively.

Figure 9 is a simplified, cross-sectional view of a stator showing a conventional stator winding size and fill configuration.

Figure 10 is a diagrammatic view of a stator assembly, with portions broken away and sectioned, showing one approach for deforming the stator tooth tips.

### DETAILED DESCRIPTION OF THE PREFERRED EMBODIMENTS

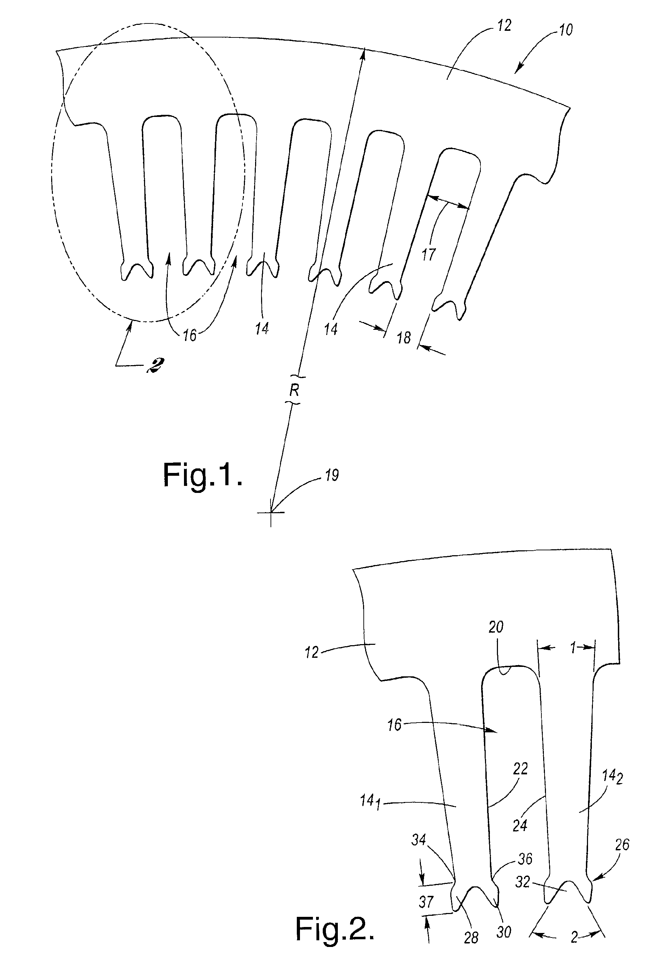

Referring now to the drawings wherein like reference numerals are used to identify identical components in the various views, Figure 1 is a partial plan view of a stator core 10 suitable for use in accordance with the present invention. Core 10, as shown, includes a yoke 12, a plurality of teeth 14, and a plurality of intervening slots 16. Each slot 16 has a nominal slot width 17, and a slot opening having a width 18. The stator core 10 shown in Figure 1 is that produced after a first stage of manufacturing, but prior to insertion of stator windings, and a cold-forming operation to form tooth tips, to be described in detail hereinafter.

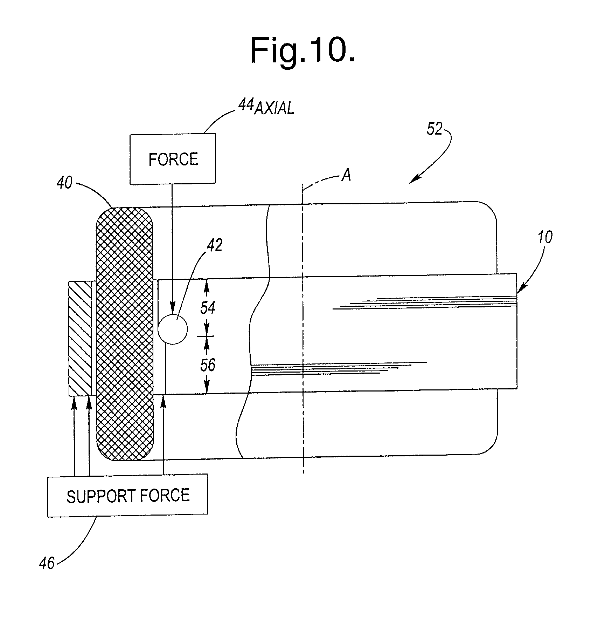

Stator core 10 is generally cylindrical having a main longitudinal axis "A" (best shown in Figure 10), which may be described as extending into the paper of Figure 1 at center point 19. Stator core 10 has an outside diameter of radius R, also as shown. The relative radial length in Figure 1 has been foreshortened in relative scale for clarity of illustration purposes only. Core 10 is suitable for use in a stator assembly for a dynamoelectric machine, such as an AC generator for an automotive vehicle, for example, for a Lundell type generator (*i.e.*, an AC generator having claw-shaped rotor poles, the stator windings being wound in a multiphase configuration, such as a three phase configuration, and connected to a rectifier to produce a DC output). In a preferred embodiment, a plurality of relatively thin, generally circular laminations are stamped or otherwise formed from suitable magnetic material (*e.g.*, silicon steel or the like), and are then adhered together in a stack having a predesired axial length, as understood generally by one of ordinary skill in the art. In a first preferred embodiment, the stator core 10 may be of the type having 72 slots. In a second preferred embodiment, the stator core 10 may be of the type having 36 slots.

Figure 2 is an enlarged view of the portion of Figure 1 encircled in phantom line. Each slot 16 is formed by adjacent teeth, shown in Figure 2 as adjacent teeth 14₁ and 14₂. Slot 16 is configured to receive stator windings of a type that have a width that is substantially equal to the slot width 17 (best shown in Figure 1). The correspondence in width provides for improved slot fill.

Slot 16 includes a top 20 adjacent to yoke 12 and a pair of sides 22 and 24 defined by adjacent teeth 14₁ and 14₂ (in addition to an open bottom defining slot opening 18 described in connection with Figure 1). In the illustrated embodiment, sides 22 and 24 are generally parallel over the radial extent of teeth 14₁ and 14₂.

Tooth 14, in the illustrated embodiment, circumscribes a predetermined angle 21 taken relative to center point 19 (best shown in Figure 1). In the first preferred embodiment described above, 21 is approximately 5 degrees, forming a 72-tooth, 72-slot stator core 10. In alternate embodiments, 21 varies in accordance with the number of slots/teeth (*e.g.*, a 36 slot stator core would have a stator tooth spanning an angle 21 greater than 5 degrees).

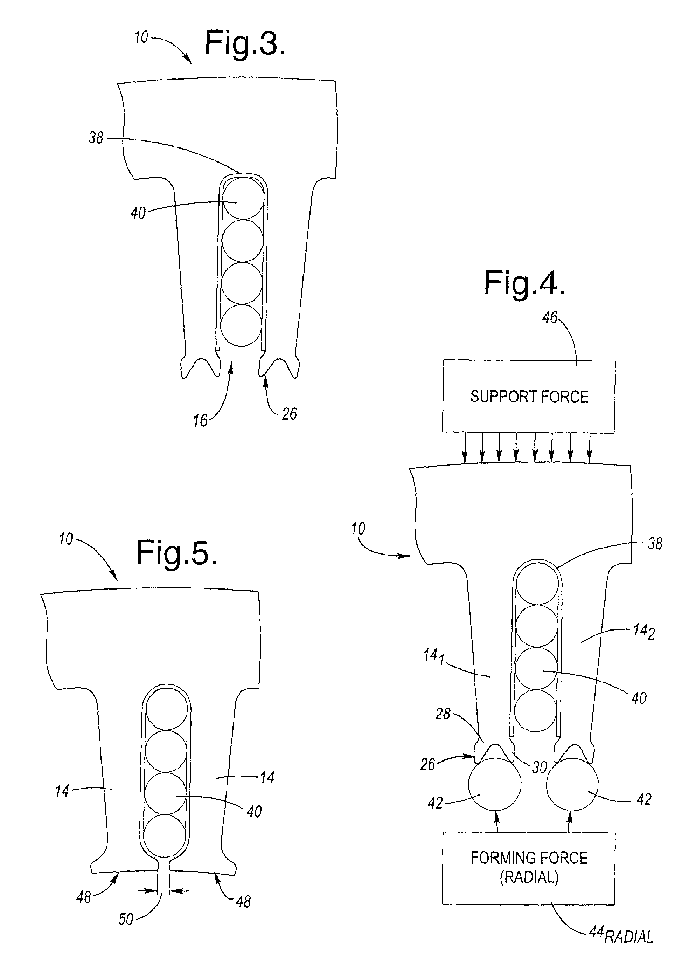

One advantage of the present invention is that it provides an increased slot opening 18 relative to the width 17 of slot 16. Preferably, the slot opening 18 is substantially equal to a width selected to admit (in a radial fashion) only one stator winding conductor therethrough at a time. The depth of slot 16 may be selected to accept a plurality of stacked, layers of individual stator winding conductors, as shown in Figure 3 for example. In one embodiment, the slot opening was about 0.1005 inches and the slot width 17 was about of 0.1205 inches. This difference of about 0.0200 inches in width allows for the insertion of an insulating slot liner 38, best shown in Figures 3-5. Thus, the width of the stator slot opening is substantially equal to the width of one wire plus a suitable clearance between the wire and the slot liner. It should therefore be understood from the foregoing that the width of the stator winding, the width of the slot opening 18 and the width 17 of the slot itself need not each be of the identical dimension. In a constructed embodiment, for example, the slot opening 18 was about 83% of the width of the slot itself (0.1005/.1205), substantially equal for purposes of this invention. Of course, the slot liner may be omitted, thereby allowing a much closer correspondence in size between the wire width, the opening width, and the slot width itself. In general, it should be understood that the slot opening and the wire width will be closer numerically to each than with respect to the slot width, in the case where a slot liner is used.

The increased slot opening 18 is achieved by producing (*e.g.*, stamping) the profile shown in Figure 1, and deferring final formation of the small gap "tooth tips" until after the core 10 itself has been made (adhering laminations together) and wound with stator windings. To facilitate the ultimate step of forming the tooth tips, a variety of features are initially formed on a radially innermost portion of the plurality of teeth 14 (herein designated generally "first ips" 26 in Figure 2). In particular, each tooth 14 includes (i) a pair of legs 28; (ii) a recess 32 disposed therebetween, and (iii) a pair of relief radii 34 and 36.

Recess 32 is formed, in part, by the inner sides of legs 28 and 30. The inner sides form a predefined angle 22 relative to each other. The predefined angle 22 may be at least about 45 degrees, more preferably at least about 60 degrees, and may be about 66 degrees in a constructed embodiment (*e.g.*, 66.1552 degrees). The recess 32 has a radial extent that is at least one-half of the radial extent 37 of legs 28 and 30, and, more preferably, approximately the same radial extent as legs 28 and 30. The relief radii 34, 36 facilitate deformation of the first tips 26 into the final tooth tips (best shown in Fig. 5).

Figures 2-5 show the progression of a method of manufacturing a dynamoelectric machine according to the invention, which combines a one-slot width wide stator winding and deforming operation.

Figure 2 shows the first step of the inventive method, namely, providing a stator core 10 having a main axis "A" (Figure 10) including a yoke 12 and a plurality of radially inwardly-projecting teeth 14 separated by intervening slots 16 wherein a radially innermost portion of the teeth each includes a pair of legs 28 and 30, with a recess 32 disposed between the legs. Legs on adjacent teeth define a plurality of slot openings 18 each having a first width.

Figure 3 show the next step of the inventive method, namely, inserting stator windings 40 radially through the slot openings into the slots wherein the windings have a second width substantially equal to the slot width 17 of the slots. The method may include the further step of inserting a stator slot liner (insulator) 38 in slot 16. Alternatively, the slot liner 38 can be omitted and a powder coat of insulating material can be used in lieu thereof. The stator windings 40 would be inserted after the slot liner 38, if used. Windings 40 are shown as being of a round geometry copper magnet wire.

Figure 4 shows the next stage, particularly, the beginning of a cold-forming operation on the radially innermost ends of teeth 14₁ and 14₂ to form the final tooth tips. Figure 4 shows a suitably configured forming tool (*e.g.*, a ball with a size selected to effect the desired radius, and arranged in a ball roller configuration 42). Ball roller 42 is shown disposed against legs 28 and 30 of teeth 14. Figure 4 also shows the radial forces, designated 44_{RADIAL} that are applied during the cold-forming operation. A support force, designated support force 46, is employed such as by providing a reaction surface or in other known ways.

The ball roller 42 may be rolled along the bottom of tooth 14 (*i.e.*, the inside diameter of the stator core 10) in an axial direction. This movement deforms the material at the bottom (*i.e.*, radially innermost) of tooth 14 to define a final "tooth tip" 48.

Figure 5 illustrates the final or completed stage where the tooth tip 48 is newly formed on a radially innermost portion of each tooth 14. As a result of the cold-forming operation, a second slot opening width 50 is established that is smaller than the first slot opening width 18 shown in Figure 1. The closed up slot width provides an improved magnetic flux path, and further functions to retain the stator windings 40. The tooth tips are particularly important at low rotational speeds, such as may be experienced during idle or slightly faster than idle condition in an automotive vehicle (*e.g.*, 1600 rpm). In one configuration, the tooth tips improved the output amps of an alternator having normally "straight sided" stator teeth, such as shown by example only in my U.S. Patent No. 6,278,213 issued to Bradfield entitled "HIGH FILL STATOR DESIGN," hereby incorporated by reference. These improvements are shown in Table 1 below.

**Table 1**

| Speed (RPM) | Impact (Amps) |
|---|---|
| 1600 | +6 |
| 3000 | +2 |
| 6500 | +0 |

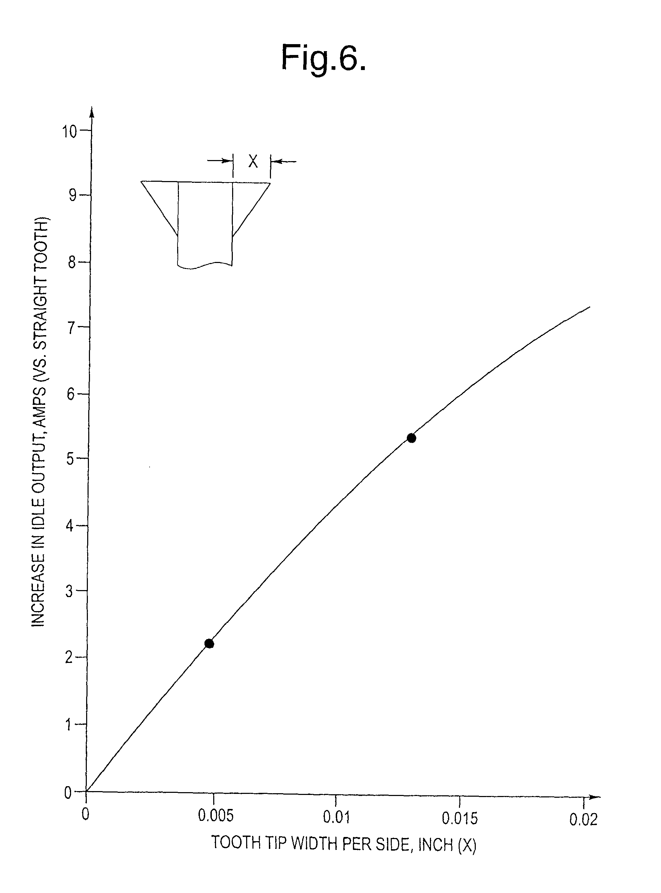

It should also be understood that the lateral extent of the final tooth tip may be varied in order to obtain desired performance characteristics. Figure 6 shows a relationship between the lateral extent of the final tooth tip and an increase in power output (amps) at idle speed, for a 72 slot embodiment.

It should also be understood that shapes other than round-shaped wires may be used for stator windings 40, and remain within the spirit and scope of the present invention.

Figure 7, for example, shows the present invention employing a rectangular shaped stator winding 40a.

Figure 8, for a further example, shows the present invention employing a square shaped stator winding 40b.

Figure 9 is a simplified cross-sectional view showing a conventional stator arrangement, with a relatively small diameter stator winding 51, relative to the width of the stator slot. This prior art configuration, as described in the Background, result in a relatively low slot fill percentage, which reduces the power output and efficiency of the generator.

Figure 10 is a simplified view of a stator assembly 52 that includes a stator core 10, with portions broken away and sectioned. Figure 10 shows one approach for deforming the legs 28, 30 of stator teeth 14 in order to form "tooth tips". Figure 10 further shows an axial force, designated 44_{AXIAL} that is applied by the ball roller 42 to the stator teeth 14. Figure 10 also shows longitudinal axis "A". In another embodiment, during the cold-forming operation, a first portion of core 10, designated first axial portion 54, is deformed using ball roller 42. This is done by commencing the forming operation at a first axial end of stator core 10 and proceeding in a first axial direction (*e.g.*, in the down direction given the orientation of assembly 52 in Figure 10). The stator assembly 52 is then turned over, and the remaining axial portion, designated second axial portion 56, is worked. This is done by commencing the cold-forming operation at a second axial end of stator core 10 (the bottom end in Figure 10) and proceeding in a second axial direction opposite the first axial direction mentioned above (*i.e.*, in the up direction in Figure 10). The foregoing steps are performed so that forces from the ball roller 42 do not cause the individual laminations that form stator core 10 to separate at the bottom edge of the stack as the ball roller exits.

In accordance with the invention, an enlarged stator slot opening is combined with an enlarged diameter stator winding (*viz*., substantially equal to the width of the stator slot). After stator winding insertion, which may be done using conventional in-slot winding machines, then the tooth tips are cold-formed on the radially-innermost ends of the stator teeth. The features of the invention allow the enlarged stator winding to be inserted through an increased-size slot opening compared to the slot openings found in conventional arrangements. The foregoing increase in size allows a larger size conductor to be inserted in the slot, thereby obtaining a higher stator slot fill, which allows and enables a higher generator efficiency and output for a given package size. After winding, the enlarged slot opening is closed up using, for example, a cold-forming operation. The closed-up slot opening, which is now reduced in width (akin to a conventional slot opening), provides an improved magnetic flux path and performance (particularly at low speed), and further provides a wire retention function.

## Claims

1. A method of making a dynamoelectric machine comprising the steps of:
(A) providing a stator core having a main axis and including a plurality of teeth separated by intervening slots wherein each tooth includes unformed tooth tips that define a slot opening;
(B) inserting stator windings, having a width substantially equal to a slot width, through the slot openings into the slots; and
(C) deforming the unformed tooth tips so as to reduce the slot openings.

2. A method of making a dynamoelectric machine comprising the steps of:
(A) providing a stator core having a main axis including a yoke and a plurality of radially inwardly-projecting teeth separated by intervening slots wherein a radially innermost portion of said teeth each includes a pair of legs with a recess disposed therebetween that defines a corresponding plurality of slot openings having a first width;
(B) inserting stator windings radially through the slot openings into the slots wherein the windings have a second width substantially equal to a slot width of the slots; and
(C) deforming the radially innermost portion of said teeth so as to reduce the slot openings to a third width that is less than the first width.

3. The method of claim 2 further including the step of:
selecting a geometry for the stator windings from the group comprising a round shape, a square shape, and a rectangular shape.

4. The method of claim 2 wherein said deforming step includes the substep of:
cold working the radially innermost portion of said teeth so as to deform the legs laterally toward adjacent slots.

5. The method of claim 2 further comprising the step of:
inserting a slot liner in each slot wherein a combined width of the stator winding and the slot liner is substantially equal to the slot width.
